# EUROPEAN PATENT SPECIFICATION

(11) **EP 0 561 440 B1**
(45) Date of publication and mention of the grant of the patent: **13.09.1995**
(21) Application number: 93200489.8
(22) Date of filing: 22.02.1993
(51) Int. Cl.: B60J 1/17, B60J 5/04

(54) **Vehicle door mounting panel**
Montageplatte für Fahrzeugtür
Plaque de montage pour porte de véhicule

(30) Priority: 16.03.1992 US 852055
(43) Date of publication of application: 22.09.1993
(73) Proprietor: GENERAL MOTORS CORPORATION, Detroit Michigan 48202 (US)
(72) Inventor: Compeau, David Edward, Oxford, MI 48371 (US); Shah, Suresh Deepchand, Troy, Michigan 48084 (US); Raisoni, Jayprakash Uttamchand, Troy, MI 48098 (US)
(74) Representative: Denton, Michael John

(56) References cited:
- EP-A- 0 286 923
- FR-A- 2 416 809
- GB-A- 2 117 329
- US-A- 4 882 842

## Description

The present invention relates to a mounting panel supporting a window and a window regulator in a vehicle door.

The prior art has recognized the desirability of manufacturing a vehicle door with the door hardware such as the window, the window regulator, and the door handles mounted on a panel to provide a module which may be preassembled and tested away from the vehicle assembly line (see, for example, EP-A-0 286 923 or GB-A-2 117 329).

The prior art has also recognized the desirability of manufacturing such a door hardware module using a moulded plastics material construction for the module panel in order to provide lightweight and economical manufacture. In order to provide a plastics material mounting panel of adequate strength and rigidity, metal tubes have been embedded in the module. Alternative stiffening methods have used stiffening ribs moulded in the module panel (see, for example, FR-A-2 416 809).

The present invention seeks to provide an improved mounting panel for a vehicle door.

According to an aspect of the present invention, there is provided a mounting panel for supporting a window and a window regulator in a vehicle door as specified in claim 1.

Preferably, there is provided a one-piece moulded plastics door module mounting panel which includes integrally moulded tubular spokes extending between front and rear window guide channels and an integral plastics mounting plate for a window regulator.

In an embodiment, there is provided a one-piece moulded plastics mounting panel which includes radially spaced apart spokes and having integrally moulded arm rest supports projecting laterally therefrom.

In another embodiment, there is provided a one-piece moulded plastics mounting panel which includes radially spaced part hollow tubular spokes and having support portions moulded thereto to mount door operating hardware such as a window regulator, a door handle, and an arm rest.

Preferably, there may be provided a one-piece moulded plastics mounting panel of hollow plastics tubular construction carrying integral apertured mounting brackets for receiving fasteners by which the mounting panel can be mounted to a vehicle door.

In a practical embodiment, a mounting panel is provided for mounting a window and a window regulator in a vehicle door. The mounting panel is preferably formed of a one-piece plastic moulded member including a central planar mounting plate adapted to mount a window regulator, and a plurality of spaced apart spokes moulded integrally with the mounting plate and radiating generally forwardly and rearwardly therefrom to mount guide channels receiving edges of a vehicle window. The window guide channels are preferably integrally moulded with the radiating spokes. The spokes are hollow tubular members of generally circular cross-section. The mounting panel may also have a plurality of integrally moulded arm rest supports which project laterally therefrom and are adapted to support an arm rest structure of a vehicle door. A plurality of apertured mounting brackets are preferably moulded integrally with the spokes for receiving fasteners by which the mounting panel can be mounted on a vehicle door. A plurality of snap fasteners may be integrally moulded with the mounting panel for snap together fastening of door operating hardware as a window regulator, a window regulator motor, a door handle, and door latch control rods.

An embodiment of the present invention is described below, by way of illustration only, with reference to the accompanying drawings, in which:
Figure 1 is a side elevational view of a door hardware module using an embodiment of one-piece moulded plastics mounting panel;
Figure 2 is a partial plan view of the mounting panel of Figure 1 taken along line 2-2 of Figure 1;
Figure 3 is a sectional view of the mounting panel of Figure 1 taken along line 3-3 of Figure 1 to show the mounting of a window regulator and a window regulator motor on the mounting panel;
Figure 4 is an enlarged fragmentary view of Figure 3;
Figure 5 is a sectional view of the mounting panel of Figure 1 taken along line 5-5 of Figure 1;
Figure 6 is a sectional view of the mounting panel of Figure 1 taken along line 6-6 of Figure 2 to show the mounting of door latch control rods in an integral snap fastener of a door panel;
Figure 7 is a sectional view of the fastener of Figure 6 taken along line 7-7 of Figure 6; and
Figure 8 is a sectional view of the mounting panel of Figure 1 taken along line 8-8 of Figure 2 to show a snap-fit attachment of an internal door handle to the mounting panel.

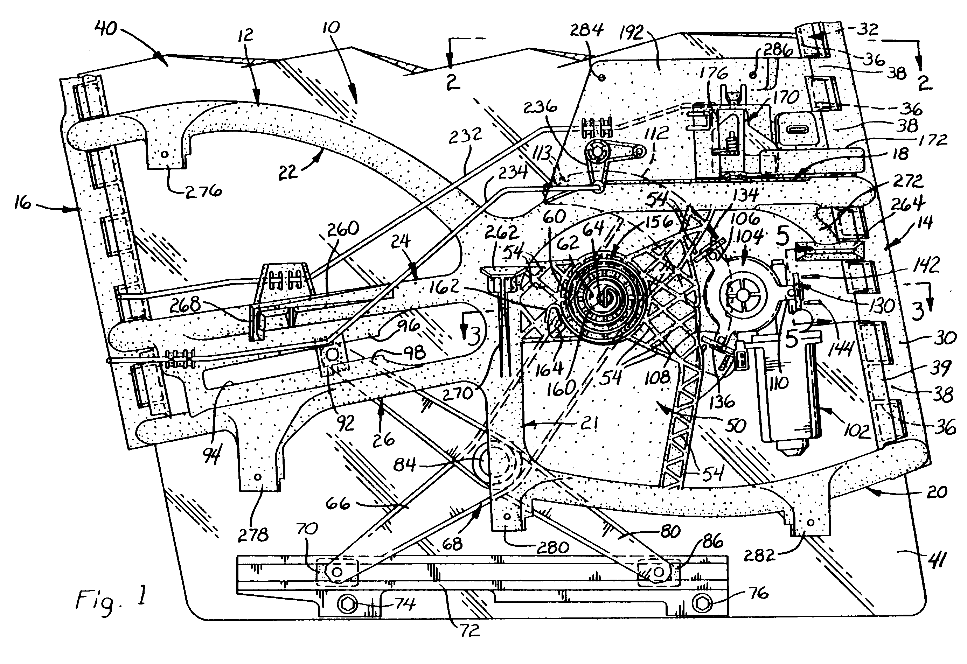

Figure 1 is a side elevational view of a hardware module 10 for a vehicle door. The module 10 includes various door hardware elements mounted on a one-piece moulded mounting panel 12 of plastics material. The mounting panel 12 includes a front guide channel 14 and a rear guide channel 16 which are integrally connected by a plurality of hollow tubular spokes of substantially circular cross-section, including spokes 18 and 20 which radiate forwardly from a central vertical spoke 21 to the front guide channel 14, and a plurality of spokes 22, 24 and 26 which radiate rearwardly from the central vertical spoke 21.

A suitable moulding process and equipment for moulding the hollow tubular spokes is described in US-A-4,740,150, US-A-4,923,667, US-A-4,824,732, US-A-4,923,666 and US-A-4,498,860.

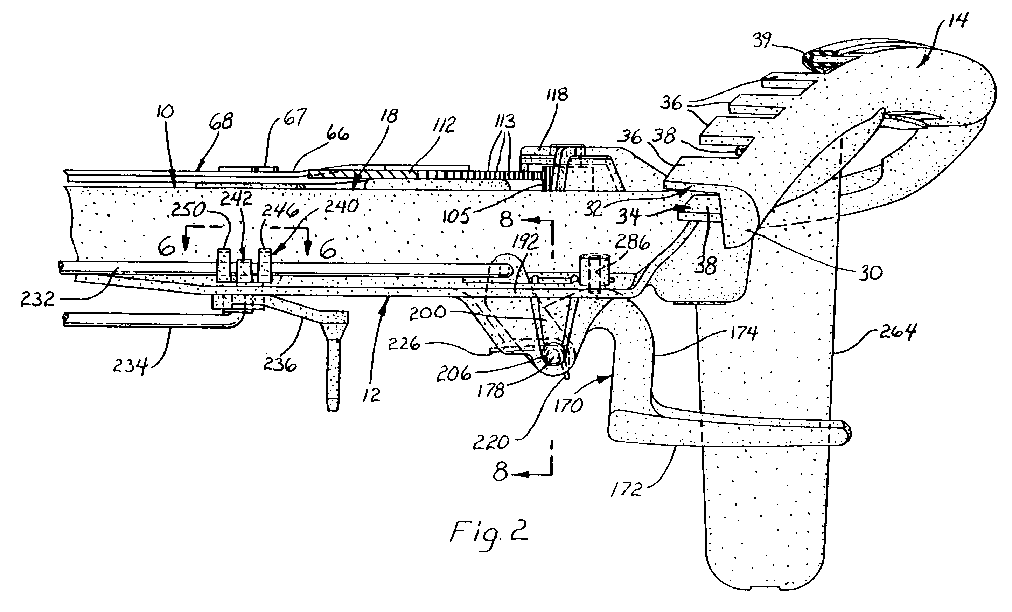

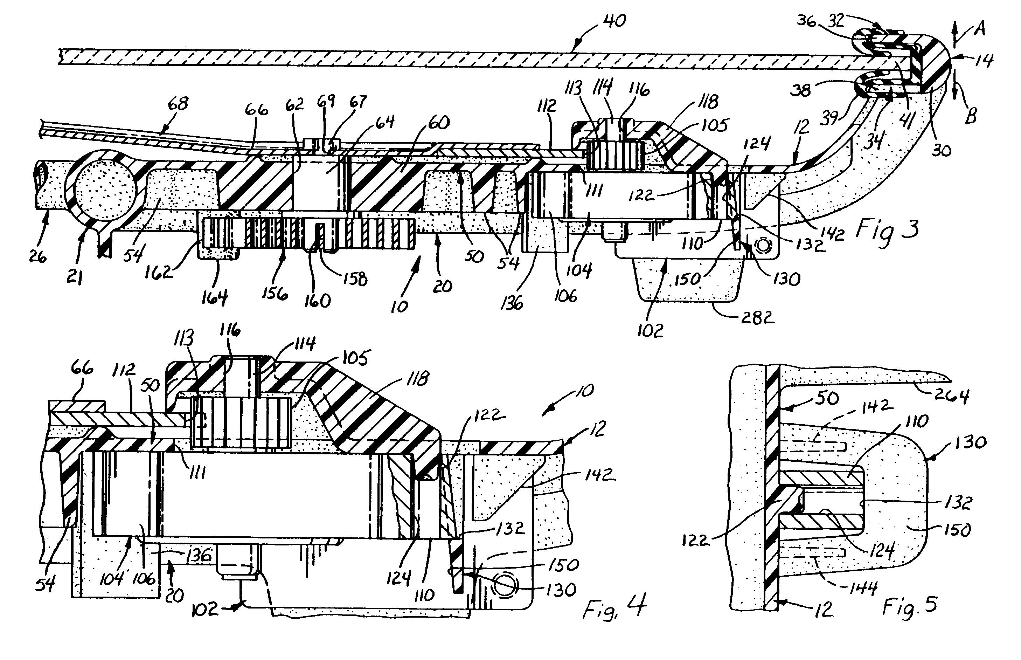

The window guide channel 14 is generally C-shaped in cross-section, as seen in Figure 3, and includes a hemispherical base wall 30 and spaced apart channel walls 32 and 34. As best seen in Figures 1 and 2, the channel wall 32 is formed by spaced apart tabs 36 and the channel wall 34 is formed by spaced apart tabs 38. These tabs 36 and 38 are staggered relative to one another so that the mould halves in which the mounting panel 12 is moulded can be pulled apart in the direction indicated by arrows A and B in Figure 3. As seen in Figure 3, an elastomeric slide strip 39 is installed into the guide channel 14 between the channel walls 32 and 34 slidably to receive the edge 41 of a window panel 40.

As best seen in Figures 1 and 3, the mounting panel 12 includes a generally planar window regulator mounting plate 50 which is an integrally moulded part of the mounting panel 12 and extends between the vertical spoke 21, the upper spoke 18 and the lower spoke 20. The mounting plate 50 is reinforced by a network of stiffening ribs 54 which project substantially perpendicularly from the mounting plate 50 and extend between the spokes 18, 20, and 21. The network of strengthening ribs 54 also forms a circular hub 60 having a bore 62 in which a metal pivot shaft 64 is rotatably received. As seen in Figures 1 and 3, the pivot shaft 64 is non-rotatably attached to a stamped steel window regulator lift arm 66 of a window regulator 68. This attachment is obtained by a twist-lock projection 67 of the pivot shaft 64 which extends into an aperture 69 of lift arm 66, described further in US-A-5,079,871.

As shown in Figure 1, the lift arm 66 carries a slide 70 on the end thereof which rides in a sash channel 72 attached to the window panel 40 by rivets 74 and 76. The window regulator 68 also includes a regulator arm 80 which is pivotally connected to the lift arm 66 by a pivot 84. The regulator arm 80 carries thereon a slide 86 which rides in the sash channel 72. The regulator arm 80 also has a slide 92 pivotally carried on the other end thereof which rides in a slot 94 of the mounting panel 12. This slot 94 is formed by integral webs of material 96 and 98 which project from respective tubular spokes 24 and 26.

The mounting panel 12 also has integral features which enable the mounting of a motor assembly 102 for operating the window regulator 68. As seen in Figure 1, the motor assembly 102 includes a gear box 104 having mounting lugs 106, 108 and 110 spaced around the circumference thereof. As seen in Figure 3, the motor assembly 102 is positioned with the gear box 104 in juxtaposition with the face of mounting plate 50 and a pinion gear 105 of the gear box 104 extending through an aperture 111 in the mounting plate 50 to engage with a plurality of teeth 113 displayed on an arcuate sector 112 carried by the lift arm 66. The pinion gear 105 is mounted on shaft 114 which projects through a bore 116 provided in a mounting arm 118 which is moulded integrally with the mounting plate 50. The motor assembly 102 is anchored against rotation by a cylindrical stud 122 which projects from the central plate 50 into a bore 124 in the mounting lug 110 of the gear box 104. Similar mounting studs, not shown, project through similar bores provided in the mounting lugs 106 and 108 of the gear box 104. The motor assembly 102 is fastened against removal from the mounting panel 12 by a resilient snap tab 130 which projects laterally from the mounting plate 50 and has a undercut shoulder 132 for engagement with the mounting lug 110 of the gear box 104. As seen in Figure 1, additional snap tabs 134 and 136 are associated with the mounting lugs 106 and 108. A pair of back up shoulders 142 and 144 are moulded integrally with the mounting plate 50 and project in spaced relation behind the tab 130 to prevent over travel of the tab 130. Similar back up shoulders are provided behind the snap tabs 134 and 136.

As best seen in Figure 4, it will be understood that the motor assembly 102 is installed upon the mounting panel 12 by thrusting the gear box 104 in a direction towards the mounting plate 50 so that the mounting lug 110 engages against a ramp face 150 of snap tab 130 and urges the snap tab 130 radially outwardly. When the gear box 104 reaches the position of Figures 3, 4 and 5 engaging the plate 50, the snap tab 130 returns to its position of Figure 4 in which the undercut shoulder 132 engages over the face of the mounting lug 110 of gear box 104. It will be appreciated that the snap tabs 130, 134, and 136 are all similarly constructed and function to secure the motor assembly 102 onto the mounting panel 14.

As best seen in Figures 1 and 3, a counterbalance spring 156 acts between the pivot shaft 64 and the mounting panel 12 to balance the weight or the window panel 40. The counterbalance spring 156 is a spiral spring and includes and inner end 158 anchored in a slot 160 of the pivot shaft 64 and an outer end 162 which hooks over an abutment 164 moulded integrally on the mounting panel 12.

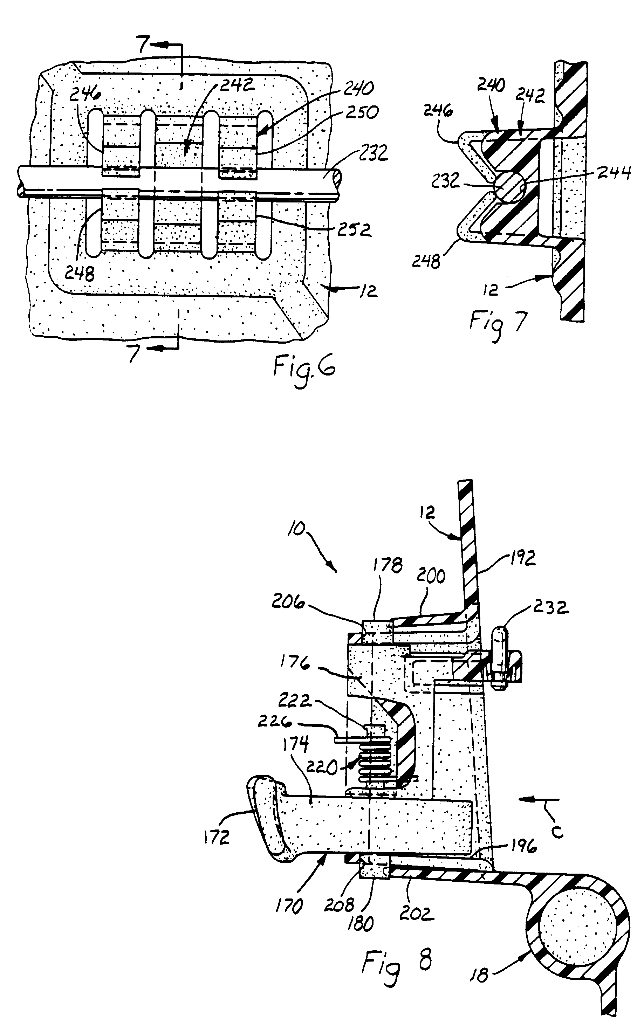

As best seen in Figures 1, 2 and 8, a door handle 170 is also mounted on the mounting panel 12. The handle 170 includes a hand grip 172 carried on a goose neck 174 which is integral with a shaft 176. The shaft 176 has pintles 178 and 180 projecting from the ends thereof. The mounting panel 12 has an integral mounting plate 192 moulded therewith and having an opening 196 through which the handle 170 may be inserted in the direction indicated by arrow C. During such insertion of the handle 170, the pintles 178 and 180 engage against and forcibly deflect lock tabs 200 and 202 into a spaced apart position until the pintles 178 and 180 are carried into engagement with journal defining walls 206 and 208 which are moulded integrally with the mounting panel 12. The pintle 178 reaches the installed position shown in Figures 2 and 8, in which the pintle is captured between the journal defining wall 206 and the spring tab 200. The pintle 180 is similarly captured between the journal wall 208 and the spring tab 202. The handle 170 is normally biased into the position shown in Figures 2 and 8 by a coil spring 220 seated on a spring seat 222 of the handle 170 and having a spring end 226 engaging the mounting panel 12 to urge the handle 170 to the position shown.

The door handle 170 is connected to a door latch, not shown, by a control rod 232. Another control rod 234 is connected to a door lock handle 236 pivoted on the mounting plate 12 and also extends to the door latch.

Figures 6 and 7 show a rod guide, into which the control rod 232 is slidably mounted. The rod guide 240 is moulded integrally with the mounting panel 12 and includes a cradle 242 having a recess 244 which receives the control rod 232. As best seen in Figure 6, a first pair of flex arms 246 and 248 are positioned on one side of the cradle 242 and a second pair of flex arms 250 and 252 are positioned on the other side of the cradle 242. As best seen in Figure 7, the first pair of flex arms 246 and 248 reach overtop of the recess 244 and are bent inwardly so that the rod 242 may be thrust into the recess by deflecting the flex arms 246 and 248 outwardly, then the flex arms return to the position of Figures 6 and 7 in which they block the rod against removal. The flex arms 250 and 252 are similar in construction and operation. A suitable alternative structure for the rod guide 240 is shown in US-A-5,074,676.

The moulded panel 12 also includes integrally moulded armrest supports 260, 262 and 264. The armrest support 260 is moulded integrally with the centre spoke 24 and extends several centimetres (inches) into the passenger compartment. An integral flange 268 depends downwardly from the underside from the support 260 to stiffen the support 262 against flexure when the armrest is suitably mounted to the armrest support 260 and is subjected to a downward force by a vehicle driver or passenger. Likewise, the armrest support 262 is supported from beneath by a gusset 270. The armrest support 264 is stiffened and strengthened by a stub spoke 272 which projects downwardly from the upper spoke 18 and is integrally moulded with the armrest support 264.

As best seen in Figure 1, the mounting panel 12 has a plurality of integral mounting brackets, including bracket 276 integral with spoke 22, bracket 278 integral with spoke 26, bracket 280 integral with vertical spoke 21, bracket 282 integral with spoke 20. Each of these brackets has an aperture therein through which a screw or other suitable fastener may be passed to attach the door hardware module of Figure 1 to the vehicle door structure. In addition, a pair of mounting apertures 284 and 286 are provided in the handle mounting plate for receiving additional fastening screws.

Thus it is seen that the described embodiment provides a door hardware module including a one piece moulded panel of plastics material including a plurality of spaced apart tubular spokes extending between spaced apart window guide channels.

In a modified embodiment, the window guide channels 14 and 16 may be separate plastics material or metal guide strips suitably attached to the ends of the spokes of the mounting panel.

The central mounting plate 50 is provided as a convenient mounting location for the window regulator, however, certain motor vehicle applications may provide alternate mounting of the window regulator and thereby obviate the need for providing a mounting plate structure integral with the moulded plastics material mounting panel.

## Claims

1. A mounting panel for supporting a window and a window regulator in a vehicle door, comprising a one-piece moulded member (12) of plastics material including a plurality of spaced apart hollow tubular spokes (18-26) integrally formed together and radiating in first and second substantially opposite directions; and first and second window guide channels (14,16) supported by the spaced apart spokes and adapted in use to receive edges of a vehicle window.

2. A mounting panel according to Claim 1, wherein the window guide channels (14,16) are integrally formed with the spaced apart spokes.

3. A mounting panel according to Claim 1 or 2, wherein the moulded member (12) includes a substantially planar mounting plate (50) formed integrally with the hollow tubular spokes (18-26) and onto which a window regulator is in use mounted.

4. A mounting panel according to Claim 3, wherein the spaced apart spokes (18-26) radiate from a hollow tubular support spoke (21) which extends substantially perpendicularly to the spaced apart spokes.

5. A mounting panel according to Claim 3 or 4, wherein the mounting plate (50) is reinforced by reinforcing ribs (54) integrally formed therewith.

6. A mounting panel according to any preceding claim, comprising a plurality of arm rest supports (260,264) integrally formed with the moulded member (12) and adapted to support an armrest structure of a vehicle door.

7. A mounting panel according to any preceding claim, comprising a plurality of apertured mounting brackets (276-282) formed integrally with the spaced apart spokes (20-26) and/or support spoke (21) for receiving fasteners used in mounting the mounting panel to a vehicle door.

8. A mounting panel according to any preceding claim comprising a plurality of snap fasteners (130-136,200-240) integrally formed with the mounting panel (12) for providing snap-fit fastening of door operating hardware to the mounting panel.

9. A mounting panel according to any preceding claim, wherein the guide channels (14,16) include first and second spaced apart side walls (32,34) each formed by a plurality of tabs (36,38) projecting from a base portion (30), the tabs of the first side wall (32) being off-set relative to the tabs on the second side wall (34).

## Patentansprüche

1. Eine Befestigungsverstrebung für das Tragen eines Fensters und eines Fensterregulators in einer Fahrzeugtür mit einem einstückig geformten Glied (12) aus Kunststoffmaterial, das eine Vielzahl voneinander beabstandeter hohler rohrförmiger Speichen (18-26) umfaßt, die integral zusammen ausgebildet sind und sich strahlenförmig in erste und zweite im wesentlichen gegenüberliegende Richtungen erstrecken; und ersten und zweiten Fensterführungskanälen (14, 16), die durch die voneinander beabstandeten Speichen getragen und so ausgebildet sind, daß sie im Gebrauch Ränder eines Fahrzeugfensters aufnehmen.

2. Eine Befestigungsverstrebung nach Anspruch 1, worin die Fensterführungskanäle (14, 16) integral mit den voneinander beabstandeten Speichen ausgebildet sind.

3. Eine Befestigungsverstrebung nach Anspruch 1 oder 2, worin das geformte Glied (12) eine im wesentlichen ebene Befestigungsplatte (50) umfaßt, die integral mit den hohlen rohrförmigen Speichen (18-26) ausgebildet ist, und auf der ein Fensterregulator im Gebrauch befestigt ist.

4. Eine Befestigungsverstrebung nach Anspruch 3, worin sich die voneinander beabstandeten Speichen (18-26) strahlenförmig von einer hohlen rohrförmigen Tragspeiche (21) erstrecken, die sich im wesentlichen rechtwinklig zu den voneinander beabstandeten Speichen erstreckt.

5. Eine Befestigungsverstrebung nach Anspruch 3 oder 4, worin die Befestigungsplatte (50) durch Verstärkungsrippen (54) verstärkt ist, die integral damit ausgebildet sind.

6. Eine Befestigungsverstrebung nach einem der vorhergehenden Ansprüche mit einer Vielzahl von Armlehnenträgern (260, 264), die integral mit dem geformten Glied (12) ausgebildet und so ausgelegt sind, daß sie eine Armlehnenstruktur einer Fahrzeugtür tragen.

7. Eine Befestigungsverstrebung nach einem der vorhergehenden Ansprüche mit einer Vielzahl von mit Öffnungen versehenen Befestigungstragarmen (276-282), die integral mit den voneinander beabstandeten Speichen (20-26) und/oder der Tragspeiche (21) ausgebildet sind, um Befestiger aufzunehmen, welche bei der Befestigung der Befestigungsverstrebung an einer Fahrzeugtür verwendet werden.

8. Eine Befestigungsverstrebung nach einem der vorhergehenden Ansprüche mit einer Vielzahl von Schnappbefestigern (130-136, 200-240), die integral mit der Befestigungsverstrebung (12) ausgebildet sind, um eine Schnappsitzbefestigung von Türbetriebsbauteilen an der Befestigungsverstrebung vorzusehen.

9. Eine Befestigungsverstrebung nach einem der vorhergehenden Ansprüche, worin die Führungskanäle (14, 16) erste und zweite voneinander beabstandete Seitenwände (32, 34) umfassen, die jeweils durch einen Vielzahl von Ansätzen (36, 38) gebildet sind, die von einem Grundteil (30) vorstehen, wobei die Ansätze der ersten Seitenwand (32) bezüglich der Ansätze auf der zweiten Seitenwand (34) versetzt sind.

## Revendications

1. Panneau de montage pour le support d'une vitre et d'un système de lève-vitre dans une portière de véhicule, comprenant un élément moulé monobloc (12) en matière plastique comportant une pluralité d'armatures tubulaires creuses espacées les unes des autres (18 à 26) formant une seule pièce et partant radialement dans des première et deuxième directions sensiblement opposées; et des premier et deuxième coulisseaux de guidage de vitre (14, 16) supportés par les armatures espacées les unes des autres et adaptés pour recevoir en cours d'utilisation les bords d'une vitre de véhicule.

2. Panneau de montage selon la revendication 1, caractérisé en ce que les coulisseaux de guidage de vitre (14, 16) font partie intégrante des armatures espacées les unes des autres.

3. Panneau de montage selon la revendication 1 ou 2, caractérisé en ce que l'élément moulé (12) comporte une plaque de montage sensiblement plane (50) faisant partie intégrante des armatures tubulaires creuses (18 à 26) et sur laquelle est monté en cours d'utilisation un système de lève-vitre.

4. Panneau de montage selon la revendication 3, caractérisé en ce que les armatures espacées les unes des autres (18 à 26) partent radialement d'une armature de support tubulaire creuse (21) qui se prolonge à peu près perpendiculairement aux armatures espacées les unes des autres.

5. Panneau de montage selon la revendication 3 ou 4, caractérisé en ce que la plaque de montage (50) est renforcée par des nervures raidisseuses (54) faisant partie intégrante de celle-ci.

6. Panneau de montage selon l'une quelconque des revendications précédentes, caractérisé en ce qu'il comprend une pluralité de supports d'accoudoir (260, 264) faisant partie intégrante de l'élément moulé (12) et adaptée pour supporter une structure d'accoudoir d'une portière de véhicule.

7. Panneau de montage selon l'une quelconque des revendications précédentes, caractérisé en ce qu'il comprend une pluralité de crochets de montage ouverts (276 à 282) faisant partie intégrante des armatures espacées les unes des autres (20 à 26) et/ou de l'armature de support (21) pour recevoir des attaches utilisées lors du montage du panneau de montage sur une portière de véhicule.

8. Panneau de montage selon l'une quelconque des revendications précédentes caractérisé en ce qu'il comprend une pluralité d'attaches rapides (130 à 136, 200 à 240) faisant partie intégrante du panneau de montage (12) pour fournir une fixation rapide du mécanisme de fonctionnement de portière sur le panneau de montage.

9. Panneau de montage selon l'une quelconque des revendications précédentes, caractérisé en ce qu'il comprend des coulisseaux de guidage (14, 16) qui contiennent des première et deuxième parois latérales espacées l'une de l'autre (32, 34), formée chacune par une pluralité de pattes (36, 38) partant d'une partie de base (30), les pattes de la première paroi latérale (32) étant décalées par rapport aux pattes sur la deuxième paroi latérale (34).
